# EUROPEAN PATENT SPECIFICATION

(11) **EP 1 780 897 B1**
(45) Date of publication and mention of the grant of the patent: **24.11.2010**
(21) Application number: 05023766.8
(22) Date of filing: 31.10.2005
(51) Int. Cl.: H04B 1/38, G06K 19/077, H04M 1/02, H01M 2/10, G06K 7/00

(54) **Combined battery and smart card**
Kombinierte Batterie und Chipkarte
Batterie et carte à puce combinées

(43) Date of publication of application: 02.05.2007
(73) Proprietor: RESEARCH IN MOTION LIMITED, Waterloo, Ontario N2L 3W8 (CA)
(72) Inventor: Gallagher, Niall, RR4, Cambrige, Ontario N1R 5S5 (CA); Cruickshank, Ross, Waterloo, Ontario N2K 3Z8 (CA); Ivannikov, Arkady, Mississauga, Ontario L4W 2S8 (CA)
(74) Representative: Reichl, Wolfgang

(56) References cited:
- EP-A- 1 308 874
- WO-A-01/18981
- WO-A1-01/39464
- GB-A- 2 363 882
- CHULSUNG PARK; JINFENG LIU; PAI H CHOU: 'B#: A Battery Emulator and Power-Profiling Instrument' IEEE DESIGN & TEST OF COMPUTERS vol. 22, no. 2, 01 February 2005, IEEE SERVICE CENTER, NEW YORK, NY, US, pages 150 - 159, XP011129190

## Description

### FIELD

The technology described in this patent document relates generally to the field of the manufacturing of smart card containing devices. More particularly, the patent document describes a combined smart card and battery that is useful in the manufacturing process of an electronic device.

GB 2 363 882 describes a mobile phone battery set with a replaceable SIM card mounting board. A raised platen is formed on the SIM card mounting board and is provided with a plurality of signal contacts corresponding to the signal contacts of a master SIM card receiving chamber of the mobile phone. At least two SIM card receiving chambers are formed on the SIM card mounting board. Each of the SIM card receiving chambers is configured to hold a SIM card therein and is provided with a plurality of signal contacts electrically coupled to the signal contacts arranged on the raised platen. When the battery set is received inside a battery receptacle of the mobile phone, the signal contacts set on the raised platen contact with the corresponding signal contacts in the master SIM card receiving chamber. At the same time, metal contacts arranged on the bottom side of the battery set contact with corresponding metal contacts on the battery receptacle.

### SUMMARY

A combined smart card and battery or battery emulator is described. A method for testing a smart card containing device is described and claimed.

In accordance with the teachings described herein, an apparatus for seating within a battery compartment and a smart card compartment of a device comprises a battery component and a smart card component. The smart card component is configured to couple to a smart card reader of the device. The smart card component is coupled to the battery component, and the smart card component is configured to be coupled with a smart card compartment of the smart card containing device substantially simultaneously with the coupling of the battery component into a battery compartment of the device.

The smart card component may include two horizontal edges, and at least one of the horizontal edges may have a trimmed portion so that the smart card component is not lockingly retained in the smart card compartment when inserted, or so that the smart card component may be inserted into a smart card compartment in an angled, rotating motion. The smart card component may also have two vertical edges where at least one of the vertical edges of the smart card component has a trimmed portion. The at least one trimmed vertical edge of the smart card component may be trimmed about 2.0 mm relative to the smart card compartment, and the at least one trimmed horizontal edge of the smart card component may be trimmed about 2.5 mm relative to the smart card compartment.

The battery component of the device may be either a battery or a battery emulator. The smart card may be a SIM card, a USIM card, or an RUIM card. In one example, the smart card component is a test smart card configured for communication with a local network.

The battery component and smart card component may be fixedly attached to one another by such means as gluing, screwing, taping, or soldering them together among other methods.

In another example, a system for testing a smart card containing device comprises a device having a battery compartment and a smart card compartment, and an apparatus as described above. The apparatus is positioned in the device so that the smart card component is seated at least partially within the smart card compartment.

In the system, the smart card compartment may have an opening that is open to the battery compartment and configured to retain a smart card by its edges. The battery component may be one of a battery emulator or a battery, and the smart card component may bea test smart card having at least one horizontal edge that has a trimmed portion. The smart card component may not be lockingly retained by the smart card compartment, and the battery or battery emulator may be lockingly retained in the battery compartment. In one example, neither the smart card component nor the battery are lockingly retained in the smart card containing device. The apparatus may be inserted into the battery compartment and the smart card compartment in an angled, rotating movement. The smart card may be a SIM card, a USIM card, or an RUIM card.

In an embodiment, a method for testing a smart card containing device comprises the steps of: inserting the apparatus discussed above into the device; and performing one or more tests to determine the operability of the device. The smart card may be a SIM card, a USIM card, or an RUIM card.

The method may include the step of inserting the apparatus into a smart card containing device, the apparatus being inserted in an angled, rotating movement.

In yet another example, a modified smart card comprises a smart card having horizontal edges that are dimensioned so that the smart card is not lockingly retained in a smart card holder. The smart card may be a test smart card configured for communicating with a local network. The smart card may include at least one horizontal edge that is trimmed so that the smart card has a horizontal dimension that is smaller than a smart card compartment defined in the smart card containing device.

The modified smart card may further comprise at least one vertical edge that is trimmed such that a vertical dimension of the smart card is smaller than a smart card compartment defined in a smart card containing device. The at least one vertical edge may be trimmed about 2.0 mm relative to a corresponding dimension of the smart card compartment defined in a smart card containing device, and each of the horizontal edges of the modified smart card may be trimmed about 2.5 mm relative to a corresponding dimension of a smart card compartment defined in the smart card containing device. The smart card may be a SIM card, a USIM card, or an RUIM card.

A further example includes a modified smart card comprising a smart card component having horizontal edges that are dimensioned so that the smart card component is not lockingly retained in a corresponding smart card compartment of a smart card containing device.

An example smart card system includes a first smart card component, a second smart card component, and means for physically connecting the smart card component to the smart card as well as means for electrically connecting the smart card component to the smart card. The second smart card component may be connected to the first smart card component. The means for physically connecting may include protrusions disposed on the first smart card component that are configured to clamp around the edges of the second smart card component, or the means for physically connecting may be protrusions disposed on the second smart card component that are configured to clamp around the edges of the first smart card component.

The first smart card component may be operable to act as a conduit for a contact plate of the received second smart card component so that the first smart card component relays the electrical signals from the received second smart card component through to a first smart card component contact plate.

The second smart card component may be a test smart card configured for communicating with a local network. The second smart card component may be one of a SIM card, a USIM card, or an RUIM card. The second smart card component may be disposed in a recess in a battery or battery emulator

An example apparatus for seating within a battery compartment and a smart card compartment having contacts associated with a smart card reader of a device includes a battery component coupled to a smart card component that has contacts, and means for coupling the contacts on the smart card component and to contacts in the smart card compartment. The means may include pins that are electrically coupled to the contacts on the smart card component and to PCBs that are configured to engage contacts on a smart card reader. The battery may be a battery emulator. The smart card component may be one of a SIM card, a USIM card, or an RUIM card

The smart card component may be disposed on a top side of the battery component with the pins running through the battery component to a bottom side of the battery component where they are coupled to the PCBs. The pins that are coupled to the PCBs may be configured to engage the contacts of a smart card reader that has a metal band running between the reader contacts.

The apparatus may include an arm portion that is coupled to the battery component and receives the smart card component and the pins. The pins may run through the arm portion to the PCBs.

The apparatus may include an arm portion that receives a smart card holder, wherein the holder is electrically coupled to the contacts of the smart card component and the pins are electrically coupled to the contacts through the smart card holder. The pins may extend from the contacts on the smart card component through the arm portion to the PCBs. 1Another example method for testing a smart card containing device includes the steps of inserting the apparatus discussed in the previous paragraph into the device; and performing one or more tests to determine the operability of the device. In the step of inserting the apparatus into the smart card containing device, the apparatus may be inserted in a single direction motion. The method may further comprise the step of pulling the apparatus apart to lock the apparatus into position. The method may further comprise the step of unlocking the apparatus and pushing the apparatus together to allow removal of the apparatus from the device. The method may further comprise the step of removing the apparatus from the device.

### BACKGROUND

Smart cards are small electronic devices that have a memory or microprocessor chip embedded within them. Smart cards can service a variety of applications and provide data portability, security, and convenience. Subscriber Identity Module (SIM) cards are a type of smart card that is usable with GSM networks. SIM cards are commonly used in smart card containing devices such as cell phones, personal data assistants, or other wireless communications devices. A SIM card contains a microchip that stores information and encrypts phone call and data transmissions. A SIM card can store data that identifies the wireless device with the user. This identification feature allows access to the user's own network service provider from various wireless devices that the SIM card may be inserted in. The SIM card may also store a user's personalized settings and data, such as phone number lists and e-mail address lists. Other types of smart cards include RUIM (Removable User Identity Module) cards that are usable with CDMA2000 (Code Division Multiple Access 2000) networks, and USIM (Universal Subscriber Identity Module) cards that are usable with UMTS (Universal Mobile Telephone Systems) networks. Smart cards are also used for data storage in other electronic devices such as digital cameras, computers, and other types of devices.

In the process of manufacturing smart card containing devices it is necessary to insert both a battery or battery emulator and a smart card in order to test the devices. The conventional method of testing smart card containing devices is to first manually insert the smart card into the smart card receptacle. More recent designs in some devices involve a recess with side edges. In these designs, the smart card is slid under the edges so it is retained in the recess by the edges. Second, the battery or battery emulator is inserted, typically by sliding it into the battery compartment. Finally, both objects are removed from the smart card containing device. For devices that retain smart cards within the area that is covered by the battery, the smart card is first slid into place and retained by its edges, or in newer devices, by a band that runs across the entire smart card. Then the battery is slid into place on top of the smart card. After testing is performed, the battery or battery emulator must be manually removed, and then the smart card must be manually removed. Thus, at least four manual actions are required to insert and remove the smart card and battery to test the device. This process is cumbersome and time consuming.

### BRIEF DESCRIPTION OF THE DRAWINGS

Fig. 1 shows a perspective view of an example smart card containing device with an example combined battery and smart card apparatus ready for insertion into the example smart card containing device;
Fig. 2 shows a partial cross-sectional side view of an example combined battery and modified smart card apparatus being inserted into a device;
Fig. 3 shows a perspective view of conventional smart card;
Fig. 4 shows a perspective view of an example modified smart card with horizontally trimmed edges;
Fig. 5 shows a perspective view of an example modified smart card with both horizontal edges trimmed and one vertical edge trimmed;
Fig. 6 shows a perspective view of an example modified smart card with means for receiving a smart card;
Fig. 7 shows a perspective view of the modified smart card of Fig. 6 receiving the conventional smart card of Fig. 3;
Fig. 8 shows a perspective view of an example modified battery component and smart card component apparatus;
Fig. 9 shows a cross-sectional view of the example apparatus of figure 8;
Fig. 10 shows a cross-sectional view of an example smart card containing device that uses a band to retain the smart card;
Fig. 11 shows a top view of an example combined battery emulator and smart card apparatus;
Fig. 12 shows a bottom view of the example combined battery emulator and smart card apparatus of figure 11; and
Fig. 13 shows a cross-sectional view of the example apparatus of figures 11 and 12 locked into position in an example smart card containing device.

### DETAILED DESCRIPTION

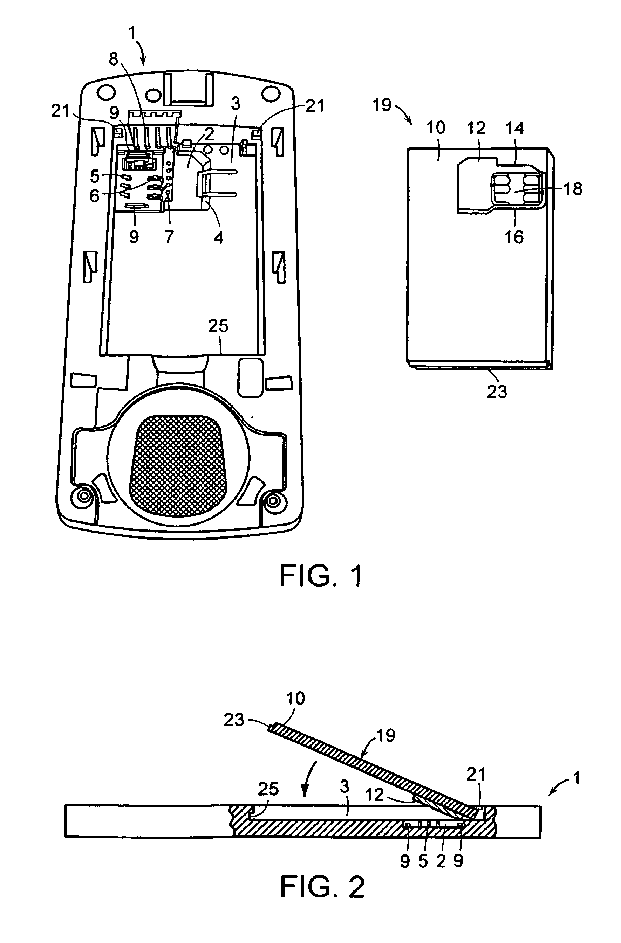

Examples of devices that combine a battery or battery emulator and a smart card are described herein and shown in Figure 1. The smart card is positioned on the battery or battery emulator and modified so that it will slide into a smart card holder compartment as the battery slides into the battery compartment of a smart card containing device. This allows for a simplified and accelerated testing phase in the manufacturing process of smart card containing devices.

Some examples of smart card containing devices are cellular phones, personal data assistants, mobile e-mail devices, and digital cameras. On many of these devices it is possible to have a smart card holder compartment that is open to the battery compartment, meaning that the smart card holder compartment is further recessed into the device and is accessible from the battery compartment.

Figure 1 shows an example system designed to improve the testing phase, and, hence, manufacturing process, of a smart card containing device. An example smart card containing device 1 is shown with a smart card holder compartment 2 that is positioned beneath and open to a battery compartment 3. Several battery contacts 8 are disposed at the top of the battery compartment 3. The smart card holder compartment 2 is recessed inwardly from the battery compartment 3. The smart card holder compartment 2 has a sloped portion 4 at the outer vertical edge that terminates toward the middle of the battery compartment 3. Various electrical contacts 5, 6, 7 are disposed in the smart card holder compartment 2. Metal ridges 9 are also disposed on the bottom of the smart card holder compartment 2 near the outer horizontal edges of the smart card holder compartment 2. The sloped portion 4 allows for insertion of a typical prior art smart card by sliding it in an angled downward and horizontal direction under the metal ridges 9. The metal ridges 9 are used to retain the smart card in position.

As part of the example system, Figure 1 also shows an apparatus having two components: a battery component 10 and a smart card component 12. The battery component 10 and smart card component 12 are coupled to one another so that the smart card component 12 will line up with a smart card holder compartment 2 when the battery component 10 is lined up with the battery compartment 3 of the device. The smart card component 12 has trimmed horizontal edges 14, 16 so that it is insertable into the smart card compartment 2, but not retained by the metal ridges 9 of the compartment 2. The smart card component 12 is sized to seat between the ridges 9, without being retained by the ridges 9. The smart card component 12 has a contact plate 18 that contacts the smart card reader contacts 5, 6 and allows transfer of data between the smart card containing device 1 and the smart card component 12. The attached battery component 10 and smart card component 12 make up an example combined battery and modified smart card apparatus 19.

For insertion, the example combined battery and modified smart card apparatus 19 is turned upside down relative to what is shown in Fig. 1 so that the smart card component 12 is aligned for insertion into the smart card compartment 2. As shown in Figure 2, for example, the combined battery and modified smart card apparatus 19 is inserted in an angled, rotating motion. Angled, rotating motion means that the combined battery and modified smart card apparatus 19 is angled downwardly toward the battery contacts 8 and then rotated downwardly into the battery compartment 3. In the depicted example, the combined battery and modified smart card apparatus 19 are also slid underneath two tabs 21 that are located at the upper corners of the battery compartment 3 when the apparatus is angled downwardly. A protrusion 23 is disposed on the surface of the battery 10 facing the opposite direction from the battery contacts 8 when the combined battery and modified smart card apparatus 19 is inserted into the device 1. The battery contacts 8 are spring loaded so that they will exert a force on the combined battery and modified smart card apparatus 19 to hold it in the battery compartment 3 by pushing the protrusion 23 underneath a recess 25 disposed in the battery compartment 3 on the surface that is opposed to the battery contacts 8.

Once inserted, the battery 10 contacts the battery contacts 8, and the contact 18 of the smart card component 12 also contacts the smart card reader contacts 5, 6 on the smart card holder compartment 2. The example smart card containing device 1 receives power from the battery 10 and data from the smart card component 12; thus providing power to the smart card containing device 1 and allowing tests to be performed on the device 1. The trimmed horizontal edges 14, 16 of the modified smart card component 12 allow the example combined battery and modified smart card apparatus 19 to be inserted substantially simultaneously.

In one example system, trimming of the horizontal edges 14, 16 relative to a prior art smart card should be enough to prevent the metal ridges 9 from impeding the movement of the smart card component 12 in the smart card holder compartment 2. In another example, the smart card component 12 may utilize trimmed horizontal edges 14, 16 that are configured such that a small amount of force is needed to insert the modified smart card component 12 between the metal ridges 9. The smart card component 12 is then removable with an equivalent amount of force. This latter embodiment provides more of a snap or press fit than the previously discussed embodiment, and may provide the user with feedback, tactile or otherwise, to know when the smart card component 12 is properly installed.

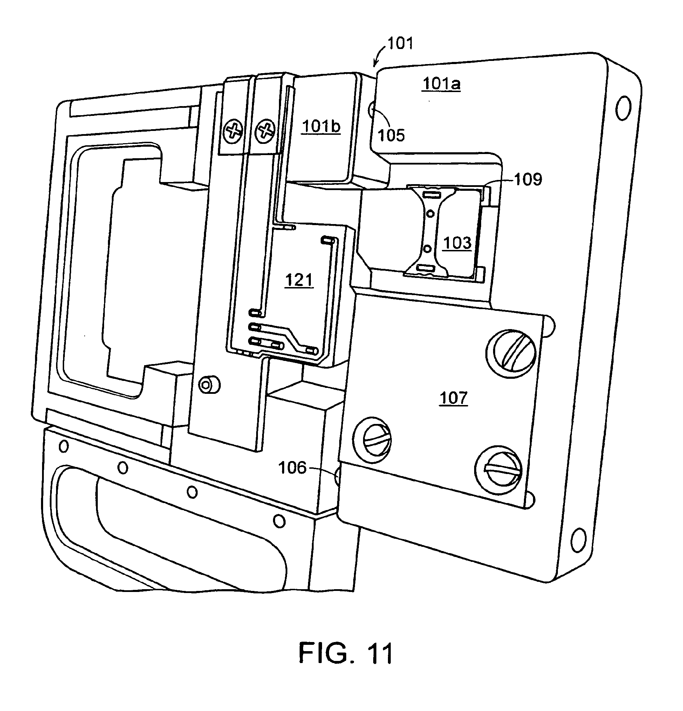

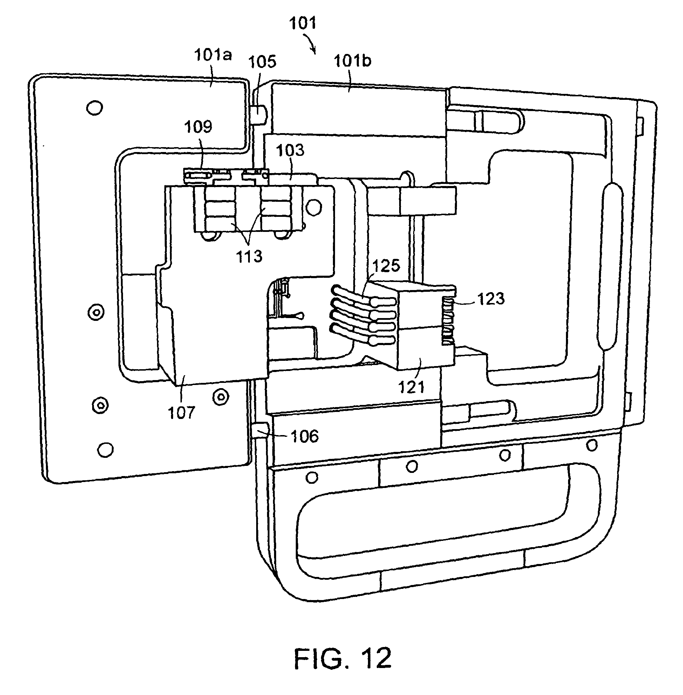

In another example, a battery emulator, an example of which is shown in Figs 11-13, forms the battery component 10 and is coupled to the smart card component 12. A battery emulator exhibits most of the qualities of a regular battery, but does not have any power cells. Instead it is connected to an outside power source. Because of this, a battery emulator can have a more constant voltage than a battery.

In another example, a modified test smart card forms the smart card component 12 and is coupled to the battery component 10. A test smart card is tied to a local network, rather than a network provided to end-users of smart card containing devices, such as GSM, CDMA200, or UMTS. For example, a local network may be provided in a factory setting to allow the testing of the device.

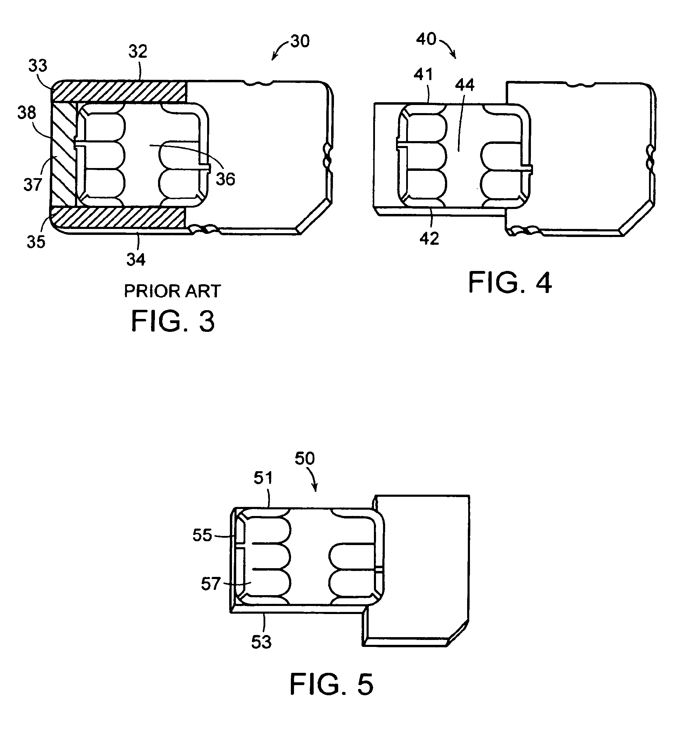

Figure 3 shows an example conventional smart card 30, and Figures 4 and 5 show examples of modified smart card components 40, 50. In the conventional smart card 30, there are two areas (which are shaded in Fig. 2) 33, 35 between the outer horizontal edges 32, 34 and the contact plate 36 of the smart card 30. There is also a third area (which is also shaded in Fig. 2) 37 between the outer vertical edge 38 and the contact plate 36. In devices that retain the smart card 30 by the horizontal edges 32, 34, the smart card 30 is slid under a structure such as the metal ridges 9 shown in Fig. 1. This structure functions to hold the smart card 30 in place so it cannot be removed or is difficult to remove perpendicularly from the smart card holder compartment. A battery is then positioned on top of the smart card 30 in the battery compartment 3, and this helps prevent the smart card 30 from sliding out horizontally. In many commercial products, a smart card, such as that shown in Fig. 3 is utilized.

Figure 4 shows an example modified smart card component 40, which is similar to the one attached to the battery 10 in Figure 1. In the modified smart card component 40 there are trimmed edges 41, 42 that border the horizontal edges of the contact plate 44. The shaded areas 32, 35 of the prior art smart card 30 in Figure 2 have been trimmed away in Figure 3. In a typical smart card the trimmed edges 41, 42 are composed of plastic. There are preferably no electronics in this area. Thus, the portion of the card that is trimmed is easily removed without affecting the operation of the smart card. A typical smart card having dimensions of approximately 85.60 mm x 53.98 mm x 0.76 mm may be trimmed 2.5 mm on each horizontal side, although the amount of trimming and the size of the card is dependent upon the device that it is to be put in. Other standard smart card sized listed in ISO/IEC 7810:2003 are 25 mm x 15 mm x 0.76 mm; 105 mm x 74 mm x 0.76 mm; 125 mm x 88 mm x 0.76 mm. The example modified smart card component 40 is primarily designed to improve the testing method for known smart cards, but could be used in commercial applications if so desired.

In another example, the trimmed edges 41, 42 may extend across the entire horizontal edge of the modified smart card component 40 (not shown), rather than just the horizontal portion bordering the contact plate 44.

Figure 5 shows another example modified smart card component 50. In this example, the horizontal edges 51, 53 are trimmed by 2.5 mm each relative to the prior art smart card of Fig. 3. The vertical side 55 that is nearest the contact plate 57 is also trimmed, in this example, by 2.0 mm. Again, the amount of trimming may vary depending on the application. Thus, all three shaded areas 32, 34, 37 shown in the prior art smart card 30 of Fig. 3 have been cut away.

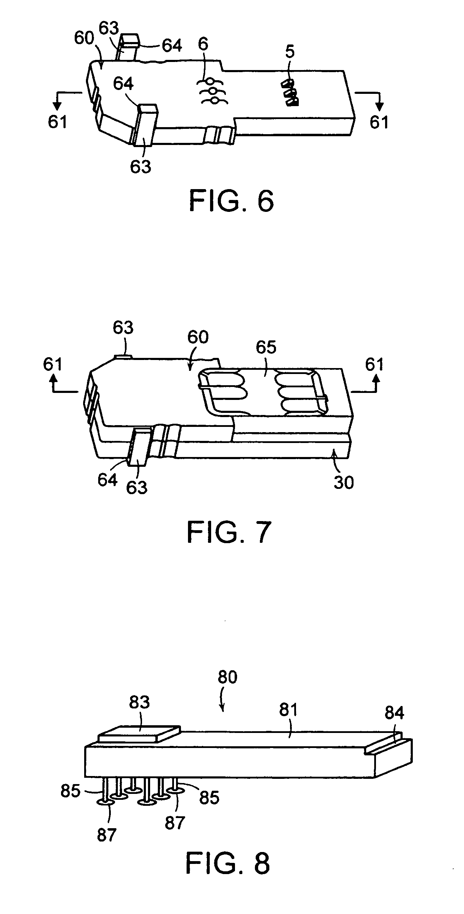

Another device for integrating a smart card and a battery in one unit involves a conventional smart card 30 that is attached to a recess in a battery or battery emulator which, in turn, is attached to a modified smart card component 60. A modified smart card component 60 that is configured to receive the conventional modified smart card 30 of Figure 3 is shown in Figure 6, and the modified smart card 60 actually receiving the conventional smart card 30 of Figure 3 is shown in Figure 7.

Referring to Figure 6, a modified smart card component 60 has trimmed edges like the modified smart card component 50 of Figure 5. In other examples, it could be trimmed like the modified smart card component 40 of Figure 4 or have any other trimming that would prevent the smart card component from being lockingly retained in a smart card compartment. Furthermore, in this example, the modified smart card 60 has two protrusions 63 that are configured to receive a conventional smart card 30. The protrusions 63 may be made of metal or plastic or some other deformable but resilient material. The protrusions 63 have a ledge 64 on the end that is configured to fit over the edge of the conventional smart card 30 when the conventional smart card 30 is received into the protrusions 63. The axis 61 1 shows that Figure 6 depicts a bottom view of the example modified smart card component 60. On the bottom side, there are smart card reader contacts 5, 6 that correspond to the smart card reader contacts 5, 6 in the smart card holder compartment 2 of the mobile device 1. When the conventional smart card 30 is received into the protrusions 63 of the modified smart card component 60, as shown in Figure 7, the smart card reader contacts 5, 6 will be in contact with the contact plate 36 of the conventional smart card 30. This example modified smart card component 60 functions to relay the electrical signals from the contact plate 36 of the conventional smart card 30 to a similar contact plate 65 on the modified smart card component 60. This example modified smart card component 60 and conventional smart card 30 could be used with a battery emulator or a modified battery that has a recess for the conventional smart card 30 to fit into.

In other examples, the modified smart card component 60 could be attached to the conventional smart card 30 in other ways. For example, the conventional smart card 30 could have protrusions that allow it to receive the modified smart card component 60. The modified smart card 60 could also be more permanently attached to the conventional smart card 30, such as by gluing, soldering, or screwing each part together, among other means for attaching.

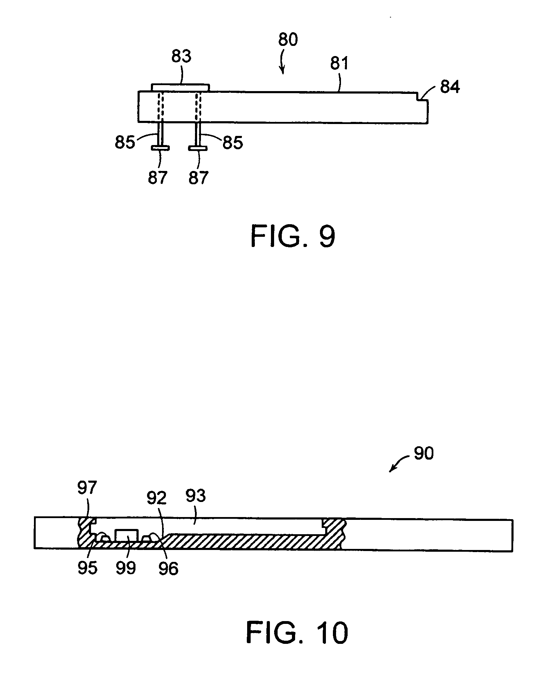

Another example of a combined smart card component and battery component apparatus 80 is shown in Figures 8 and 9. In this example a smart card 83 is disposed on a top side of the battery component 81. The top side remains exposed when the apparatus is inserted in a battery compartment. Pins 85 are in contact with the smart card 83 and run through the battery emulator 81 to contact PCBs 87. (This is best depicted in Figure 9.) In this example, there are two rows of three pins 85 connected to six PCBs 87.

This apparatus 90 is particularly useful for the testing of newer smart card containing devices 90 like that shown in Figure 10 that have a metal band 99 running around the smart card compartment 92 to hold a smart card in place, instead of the metal ridges 9 depicted in Figure 2. When the apparatus 80 is placed in the battery compartment 93 of the device 90, the pins 85 straddle the metal band 99, and are long enough to reach down into the smart card holder compartment 97 and contact each of the smart card reader contacts 95, 96. The apparatus 90 may also be used in the example smart card containing device 1 shown in Figure 1 by modifying the pins 85 and PCBs 87 to line up with the smart card reader contacts 5, 6 of the example device 1.

Another apparatus 101 that is particularly useful for the newer type of smart card containing devices 90 (see Fig. 10) is shown in Figures 11-13. This apparatus 101 is a battery emulator with a smart card 103 attached to it. The battery emulator 101 has two parts 101a and 101b that are connected by two cylinders 105, 106.

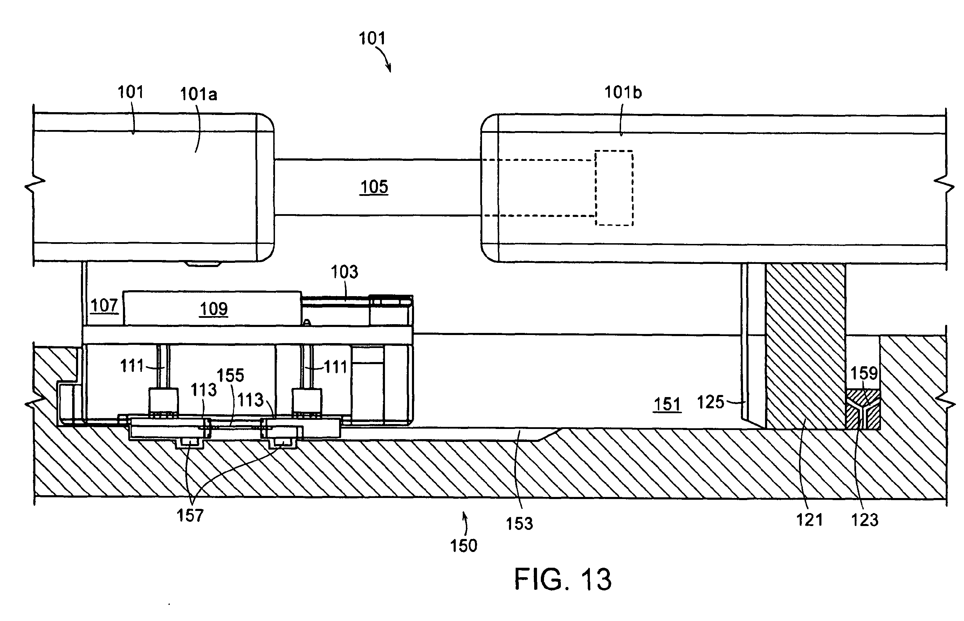

An arm 107 extends from the first part 101a of the apparatus 101. The arm includes a smart card holder 109 that holds a smart card component 103. The smart card holder has contacts that connect the contact plates of the smart card 103 to pins 111 that extend through the arm 107 to contact interface PCBs 113 on the other side of the arm 107 (see Fig. 13). There are six pins 111 that contact six interface PCBs 113. When the apparatus 101 is positioned in the smart card containing device 150 (see Fig. 13), three PCBs 113 make contact with three smart card reader contacts 157 on two sides of the metal band 155 that is disposed in the smart card compartment 153. The PCBs 113 extend far enough to reach the smart card reader contacts 157 without being impeded by the metal band 155.

A second arm 121 extends from the second part 101b of the apparatus 101. The second arm 121 includes battery contacts 123 that are configured to line up with and contact the battery contacts 159 of the smart card containing device 150. In this example, pins 125 extend from the second part 101b and enter the second arm 121 to connect with the battery contacts 123 inside the second arm 121.

The two parts 101a and 101b can be pulled away from each other so that they move approximately 5 mm apart. This telescoping movement allows the apparatus 101 to be pushed down into the battery compartment 151 and smart card compartment 153 of a smart card containing device 150 in a closed position with little or no resistance from the edges of the compartments 151, 153. The apparatus 101 can then be pulled apart into an open position to lock the apparatus 101 into the smart card containing device 150. A lever (not shown), when switched, will release the lock and allow the apparatus 101 to return to the closed position and be pulled out of the device 150.

A typical manufacturing testing process for devices containing smart cards includes a first test where several printed circuit boards are manufactured on a single panel and are tested to make sure they are functioning properly. The panel is broken into several individual circuit boards and assembled into the device. Then the keypad, display, antenna power, and telephone calling capability are tested. For this phase of testing, the battery and smart card are utilized to give power and communication capability to the device. Examples are given below of how the example devices described above are used to speed up the process of inserting and removing the smart card and battery.

In one example method, the combined battery and modified smart card apparatus 19 of Figures 1-2 is inserted in an angled, rotating motion into the smart card holder compartment 2 and battery compartment 3, as shown in Fig. 2. The tests are performed, and the combined battery and modified smart card apparatus 19 is removed by rotating it up out of the battery compartment 3 and sliding it out from the tabs 21 at an angle. Other types of motions may alternatively be used. It is not necessary for the battery and smart card to be inserted under tabs or protrusions. The modified smart card component 12 fits into the smart card compartment 2 at the same time the battery (or battery emulator) component 10 fits into the battery compartment 3. This has the advantage of decreasing the time it takes to insert and detach the battery and smart card, and results in a faster testing procedure. In the example apparatus 80 of Figures 7-9, a similar method is used to expedite the testing process of the Figure 10 smart card containing device 90.

In an example method using the example devices of Figures 11-13, the apparatus 101 is in the closed position and is inserted in a single direction motion or an angled or rotating motion. An example of a single direction motion is to be inserted and removed vertically into the battery compartment 151 and smart card compartment 153 of the smart card containing device 150. The two parts 101a and 101b are then pulled apart, locking the apparatus 101 into place. Tests are performed and the apparatus is then unlocked, in this example by a lever (not shown), and returned to the closed position. The apparatus is then removed from the smart card containing device 150.

If the device passes all the tests satisfactorily, the device will be completed by loading software. The completed device is then labeled and packaged for sale. A smart card may or may not be packaged with the device. The example combined battery and modified smart card apparatuses 19, 80, 101 save time and steps within presently known manufacturing processes.

SIM, RUIM, and USIM are known types of smart cards that are readily identifiable. However, the claims are not limited to testing methods relating to these types of smart cards. In fact, the teachings of this disclosure can be applied to any device that has a smart card compartment that is in communication with a battery compartment. Thus, the claims cover not only testing methods relating to currently known and readily identifiable smart cards, but also to smart cards that are not specifically identified or are yet to be developed. The claims are also not limited to testing methods relating to smart cards that work with the network types that the named smart cards are operable with, GSM, CDMA2000, and UMTS. The claims also cover testing methods relating to smart cards that are operable with networks that are yet to be developed.

The term "substantially" is used herein as an estimation term.

While various features of the claimed invention are presented above, it should be understood that the features may be used singly or in any combination thereof. Therefore, the claimed invention is not to be limited to only the specific examples depicted herein. The scope of the disclosure is accordingly defined as set forth in the appended claims.

## Claims

1. A method for testing the functionality of a smart card containing device (1) in a manufacturing setting, with the smart card containing device (1) having a battery compartment (3, 93) for receiving a production battery and a smart card compartment (2, 92) for receiving a separate conventional smart card (30), the method comprising:
providing a combined battery and smart card apparatus (19, 80, 101) comprising a housing (10, 81, 101a, 101b) that comprises a battery component (10, 81, 123) and a test smart card component (12, 40, 50, 60, 83, 85, 87, 113) positioned on one of an exterior surface of the battery component or on the housing, with the test smart card component (12, 40, 50, 60, 83, 85, 87, 113) being tied to a local network for testing the smart card containing device (1, 90) and having a size that is reduced relative to the dimensions of a conventional smart card (30) to allow the battery and test smart card apparatus (19, 80, 101) to be inserted in one of a single direction vertical motion or an angled, rotating motion into the battery compartment (3, 93) and smart card compartment (2, 92) of a device (1) substantially simultaneously;
inserting the apparatus (19, 80, 101) into the battery compartment (3, 93) and smart card compartment (2, 92) using one of a single direction vertical motion or an angled, rotating motion;
testing the smart card containing device (1) by running at least one test thereon; and
removing the apparatus (19, 80, 101) from the smart card containing device (1).

2. The method of claim 1, further comprising loading software onto the device (1), labeling the device (1), and packaging the device (1) for sale.

3. The method of any previous claim, wherein the test smart card component (12, 40, 50, 60) has a portion of its outer edge (14, 16, 41, 42, 51, 53, 55) that is trimmed.

4. The method of any previous claim, wherein the test smart card component (83) is positioned on the housing (81) such that electrically conductive pins (85, 87) extend from the test smart card component (83) through the housing (83) for contacting the smart card compartment (2, 92).

5. The method of any previous claim, wherein the battery component (10, 81, 123) is a battery emulator.

6. The method of any previous claim, wherein the test smart card component (12, 40, 50, 60, 113) has four outer edges (14, 16, 32, 34, 38, 41, 42, 51, 53, 55) and one or more of the outer edges are trimmed relative to the size of a conventional smart card (30).

7. The method of any previous claim, wherein the test smart card component (12, 40, 50, 60, 85, 87, 113) is dimensioned so as to not be lockingly retained within the smart card compartment (2, 92).

8. The method of any previous claim, wherein the test smart card component (12, 40, 50, 60, 85, 113) has multiple edges (14, 16, 32, 34, 38, 41, 42, 51, 53, 55) and at least some of the edges are trimmed relative to the size of a conventional smart card (30).

9. The method of any previous claim, wherein the test smart card component (12, 40, 50, 60, 83) is fixedly attached to an exterior surface of the battery.

10. The method of any of claims 1 to 8, wherein the test smart card component (12, 40, 50, 60, 83, 103) is attached to an exterior surface of the housing (10, 81, 101a) and electrical contacts extend through the housing and form electrical pads (87, 113) for coupling with the smart card compartment (2, 92).

11. The method of any previous claim, wherein the test smart card component (12, 40, 50, 60, 83, 103) is one of a SIM card, a USIM card, or a RUIM card.

12. The method of any previous claim, wherein the test smart card component (30, 83, 113) has means for receiving another smart card component (60, 85, 87, 103).

13. The method of any previous claim, wherein the smart card compartment (2, 92) is configured to retain a conventional smart card (30) having a plurality of edges (32, 34, 38) by at least one of the plurality of edges.

14. The method of any previous claim, wherein the housing (10, 81) is a battery having a battery component (10, 81) and the smart card component (12, 40, 50, 60, 83, 85, 87) is coupled to the battery.

## Patentansprüche

1. Verfahren zum Testen der Funktionalität einer Vorrichtung (1), die eine Smartcard enthält, in einer Herstellungsumgebung, wobei die Smartcard enthaltende Vorrichtung (1) ein Batteriefach (3, 93) hat zum Aufnehmen einer Produktionsbalterie und ein Smartcard-Fach (2, 92) zum Aufnehmen einer getrennten herkömmlichen Smartcard (30), wobei das Verfahren aufweist:
Vorsehen eines kombinierten Batterie- und Smartcard-Geräts (19, 80, 101), das ein Gehäuse (10, 81, 101a, 101b) aufweist, das eine Batteriekomponente (10, 81, 123) und eine Test-Smartcard-Komponente (12, 40, 50, 60, 83, 85, 87, 113) aufweist, die entweder an einer äußeren Oberfläche der Batteriekomponente oder an dem Gehäuse positioniert ist, wobei die Test-Samrtcard-Komponente (12, 40, 50, 60, 83, 85, 87, 113) mit einem lokalen Netzwerk zum Testen der Smartcard enthaltenden Vorrichtung (1, 90) verbunden ist und eine Größe hat, die relativ zu den Abmessungen einer herkömmlichen Smartcard (30) reduziert ist, um zu ermöglichen, das Batterie- und Test-Smartcard-Gerät (19, 80, 101) im Wesentlichen gleichzeitig in das Batteriefach (3, 93) und das Smartcard-Fach (2, 92) einer Vorrichtung (1) eingefügt wird, entweder in einer einzigen Bewegung in vertikaler Richtung oder einer abgewinkelten Drehbewegung;
Einfügen des Geräts (19, 80, 101) in das Batteriefach (3, 93) und Smartcard-Fach (2, 92) unter Verwendung entweder einer einzigen Bewegung in vertikaler Richtung oder einer abgewinkelten Drehbewegung;
Testen der Smartcard enthaltenden Vorrichtung (1) durch Laufen lassen zumindest eines Tests darauf; und
Entfernen des Geräts (19, 80, 101) aus der Smartcard enthaltenden Vorrichtung (1).

2. Verfahren gemäß Anspruch 1, das weiter aufweist ein Laden von Software auf die Vorrichtung (1), Etikettieren der Vorrichtung (1) und Verpacken der Vorrichtung (1) zum Verkauf.

3. Verfahren gemäß einem vorhergehenden Anspruch, wobei die Test-SmaAcard-Kornponente (12, 40, 50, 60) einen Teil ihrer äußeren Kante (14, 16, 41, 42, 51, 53, 55) abgeschnitten hat.

4. Verfahren gemäß einem vorhergehenden Anspruch, wobei die Test-Smartcard-Komponente (83) an dem Gehäuse (81) derart positioniert ist, dass sich elektrisch leitfähige Stifte (85, 87) von der Test-Smartcard-Komponente (83) durch das Gehäuse (83) erstrecken zum Kontaktieren des Smartcard-Fachs (2, 92).

5. Verfahren gemäß einem vorhergehenden Anspruch, wobei die Batteriekomponente (10, 81, 123) ein Batterie-Ernulator ist.

6. Verfahren gemäß einem vorhergehenden Anspruch, wobei die Test-Smartcard-Komponente (12, 40, 50, 60, 113) vier äußere Kanten (14, 16, 32, 34, 38, 41, 42, 51, 53, 55) hat und eine oder mehrere der äußeren Kanten relativ zu der Größe einer herkömmlichen Smartcard (30) abgeschnitten sind.

7. Verfahren gemäß einem vorhergehenden Anspruch, wobei die Test-Smartcard-Komponente (12, 40, 50, 60, 85, 87, 113) derart dimensioniert ist, dass sie nicht fest bzw. arretiert in dem Smartcard-Fach (2, 92) gehalten wird.

8. Verfahren gemäß einem vorhergehenden Anspruch, wobei die Test-Smartcard-Komponente (12, 40, 50, 60, 85, 113) mehrere Kanten (14, 16, 32, 34, 38, 41, 42, 51, 53, 55) hat und wobei zumindest einige der äußeren Kanten relativ zu der Größe einer herkömmlichen Smartcard (30) abgeschnitten sind.

9. Verfahren gemäß einem vorhergehenden Anspruch, die Test-smartcard-Komponente (12, 40, 50, 60, 83) fest an einer äußeren Oberfläche der Batterie befestigt ist.

10. Verfahren gemäß einem der Ansprüche 1 bis 8, wobei die Test-Smartcard-Komponente (12, 40, 50, 60, 83, 103) an einer äußeren Oberfläche des Gehäuses (10, 81, 101a) befestigt ist und sich elektrische Kontakte durch das Gehäuse erstrecken und elektrische Pads (87, 113) bilden zum Verbinden mit dem SmaAcard-Fach (2, 92).

11. Verfahren gemäß einem vorhergehenden Anspruch, wobei die Test-Smartcard-Komponente (12, 40, 50, 60, 83, 103) eine aus einer SIM-Karte, einer USIM-Karte oder einer RUIM-Karte ist.

12. Verfahren gemäß einem vorhergehenden Anspruch, wobei die Test-Smartcard-Komponente (30, 83, 113) Mittel hat zum Aufnehmen einer weiteren Smartcard-Komponente (60, 85, 87, 103).

13. Verfahren gemäß einem vorhergehenden Anspruch, wobei das Smartcard-Fach (2, 92) konfiguriert ist, eine herkömmliche Smartcard (30) mit einer Vielzahl von Kanten (32, 34, 38) über zumindest eine der Vielzahl von Kanten zu fixieren.

14. Verfahren gemäß einem vorhergehenden Anspruch, wobei das Gehäuse (10, 81) eine Batterie ist, die eine Batteriekomponente (10, 81) hat, und die Smartcard-Komponente (12, 40, 50, 60, 83, 85, 87) mit der Batterie verbunden ist.

## Revendications

1. Procède de détermination des fonctionnalités d'un dispositif contenant une carte à puce (1) dans un environnement de fabrication, le dispositif contenant une carte à puce (1) comprenant un compartiment pour batterie (3, 93) destiné à recevoir une batterie de production et un compartiment pour carte à puce (2, 92) destiné à recevoir une carte à puce conventionnelle distincte (30), le procédé comprenant les étapes consistant à :
fourni un appareil combinant batterie et carte à puce (19, 80, 101), comprenant un border (10, 81, 101a, 101b) qui contient un composant de batterie (10, 81, 123) et un composant de carte à puce d'essai (12, 40, 50, 60, 83, 85, 87, 113) implantés sur la surface extérieure du compartiment pour batterie ou sur le boîtier, le composant de carte à puce d'essai (12, 40, 50, 60, 83, 85, 87, 113) étant relié à un réseau local pour tester le dispositif contenant une carte à puce (1, 90) et ayant une taille qui est réduite par rapport aux dimensions d'une caste à puce standard (30) afin de permettre à l'appareil combinant batterie et carte à puce (19, 80, 101) d'être inséré de manière substantiellement simultanée dans le compartiment pour batterie (3, 93) et le compartiment pour carte à puce (2, 92) d'un dispositif (1) par un mouvement qui est soit un mouvement unique dans la direction verticale, soit un mouvement en biais avec rotation;
insérer l'appareil (19, 80, 101) dans le compartiment pour batterie (3, 93) et dans le compartiment pour carte à puce (2, 92) par un mouvement qui est soit un mouvement unique dans la direction verticale, soit un mouvement en biais avec rotation ;
essayer le dispositif contenant une carte à puce (1) en exécutant au moins un essai dessus; et
retirer l'appareil (19, 80, 101) du dispositif contenant une carte à puce (1).

2. Procédé selon la revendication 1, comprenant en outre les étapes consistant à charger du logiciel sur le dispositif (1), à étiqueter le dispositif (1) et à emballer le dispositif (1) en vue de la vente.

3. Procédé selon l'une quelconque des revendications précédentes, dans lequel le composant de carte à puce d'essai (12, 40, 50, 60) possède une arête extérieure (14, 16, 41, 42, 51, 53, 55) qui est roguée.

4. Procédé selon l'une quelconque des revendications précédentes, dans lequel le composant de carte à puce d'essai (83) est implanté sur le boîtier (81) afin que des broches électriquement conductrices (85, 87) s'étendent à partir du composant de carte à puce d'essai (83) et traversent le boîtier (81) afin d'entrer en contact avec le compartiment pour carte à puce (2, 92).

5. Procède selon l'une quelconque des revendications précédentes, dans lequel le composant de batterie (10, 81, 123) est un émulateur de batterie,

6. Procédé selon l'une quelconque des revendications précédentes, dans le composant de carte à puce d'essai (12, 40, 50, 60, 113) a quatre arêtes extérieures (14, 16, 32, 34, 38, 41, 42, 51, 53, 55) et une ou plusieurs des arêtes extérieures sont rognées par rapport à la taille d'une carte à puce conventionnelle (30).

7. Procédé selon l'une quelconque des revendications précédentes, dans lequel le composant de carte à puce d'essai (12, 40, 50, 60, 85, 87, 113) est dimensionné de manière à ne pas se coincer dans le compartiment pour carie à puce (2, 92).

8. Procédé selon l'une quelconque des revendications précédentes, dans lequel le composant de carte à puce d'essai (12, 40, 50, 60, 85, 113) possède de multiples arêtes (14, 16, 32, 34, 38, 41, 42, 51, 53, 55) et au moins certaines de ces arêtes sont rognées par rapport à la taille d'une carte à puce conventionnelle (30).

9. Procédé selon l'une quelconque des revendications précédentes, dans lequel le composant de carte à puce d'essai (121, 40, 50, 60, 83) est fixé à demeure sur une surface extérieure de la batterie.

10. Procédé selon l'une quelconque des revendications 1 à 8, dans lequel le composant de carte à puce d'essai (12, 40, 50, 60, 83, 103) est fixé sur une surface extérieure du boîtier (10, 81, 101a) et des contacts électriques s'étendent au travers du boîtier et forment des pastilles électriques (87, 113) pour le couplage avec le compartiment pour carte à puce (2, 92).

11. Procédé selon l'une quelconque des revendications précédentes, dans lequel le composant do cade à puce d'essai (12, 40, 50, 60, 83, 103) est soit une carte SIM, soit une carte USIM, soit une carte RUIM.

12. Procédé selon l'une quelconque des revendications précédentes, dans lequel le composant de carte à puce d'essai (30, 83, 113) possède un moyen destiné à recevoir un autre composant de carte à puce (60, 85, 87, 103).

13. Procédé selon l'une quelconque des revendications précédentes, dans lequel le compartiment pour carte à puce (2, 92) est configuré pour retenir une carte à puce conventionnelle (30) ayant une pluralité d'arêtes (32, 34, 38) par au moins une arête sur la pluralité d'arêtes.

14. Procédé selon l'une quelconque des revendications précédentes, dans lequel le boîtier (10, 81) est une batterie ayant un composant pour batterie (10, 81) et le composant de carte à puce d'essai (12, 40, 50, 60, 83, 85, 87) est relié à la batterie.
